(19) Europäisches Patentamt
European Patent Office
Office européen des brevets

(11) Publication number: 0 012 525 A1

(12) EUROPEAN PATENT APPLICATION

(21) Application number: 79302638.6

(22) Date of filing: 20.11.79

(51) Int. Cl.³: A 01 N 25/32, A 01 N 43/40, A 01 N 43/90

(30) Priority: 11.12.78 GB 4795378

(43) Date of publication of application: 25.06.80 Bulletin 80/13

(84) Designated Contracting States: AT BE CH DE FR GB IT NL SE

(71) Applicant: IMPERIAL CHEMICAL INDUSTRIES LIMITED, Imperial Chemical House Millbank, London SW1P 3JF (GB)

(72) Inventor: Foulkes, David Mackie, The Old School House, Turville Henley-on-Thames, Oxfordshire (GB)

(74) Representative: Alner, Henry Giveen Hamilton et al, Imperial Chemical Industries Legal Department: Patents Thames House North Millbank, London SWIP 4QG (GB)

(54) **Herbicidal compositions containing a herbicidal bipyridylium quaternary salt and an alerting agent.**

(57) Herbicidal composition comprising an aqueous solution of a herbicidal bipyridylium quaternary salt containing a bitter-tasting substance as a deterrent to accidental ingestion by acting as an alerting agent, preferred bittering agents being defined.

EP 0 012 525 A1

# IMPROVED HERBICIDAL COMPOSITIONS

This invention relates to concentrated herbicidal compositions containing a herbicidal bipyridylium quaternary salt as an active ingredient.

Following the discovery of the insecticidal properties of DDT and the synthesis of the hormone type weedkillers exemplified by 2,4-dichlorophenoxyacetic acid, a large range of pesticides has been developed for agricultural use in the control of fungal and insect pests and weeds. While these substances are necessarily toxic to certain forms of life, when used with due care and in accordance with governmentally approved codes of practice, they present no hazard to human life. However, in spite of efforts to encourage those concerned with pesticides to adopt safe handling practices, instances of misuse of pesticides do occur. One particular unsafe practice in the case of liquid pesticides is for an operator to transfer a small amount of the concentrated pesticide to a domestic container such as a beverage bottle for subsequent use at home. The risk attached to this practice is of course that a child or incautious adult coming upon the bottle may swallow the contents with possibly serious consequences.

Various proposals have been put forward to reduce the likelihood that solutions of herbicidal bipyridylium quaternary salts might be accidentally swallowed in this way. Thus, it has been proposed in U.K. Patent No. 1406881 to add a mixture of alkyl pyridines ("pyridine base") to the herbicide solution so that the distinctive odour will act as a warning that the solution is not a beverage. Other odourants have also been proposed. It has also been proposed

(see U.K. Patent 1395502) to add gelling agents to the herbicide solution to make it thixotropic, so that on standing the solution forms a gel which will not pour easily. It has also been proposed (see U.K. Patent 1507407) to add certain triazolopyrimidine derivatives to the herbicide solution to provide a composition which will provoke vomiting and consequent expulsion of the composition soon after it has been swallowed.

The present invention provides a further or alternative method of reducing the likelihood of accidental swallowing of herbicidal bipyridylium salts in the circumstances referred to above, by the inclusion in the herbicide solution of an alerting agent comprising a bittering agent (i.e. a substance having an intensely bitter flavour), which acts as a warning that the solution is not a beverage if any of the solution is taken into the mouth.

Accordingly the present invention provides a concentrated herbicidal composition comprising an aqueous solution of a herbicidal bipyridylium quaternary cation, which contains an alerting agent comprising a quaternary salt of the formula (I) or (II) below:

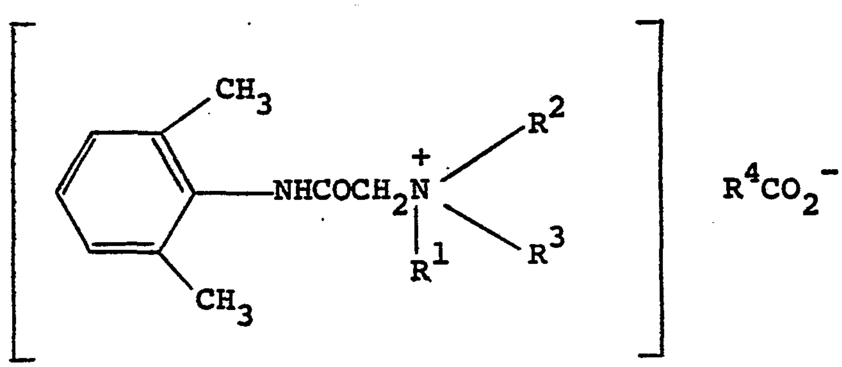

(I)

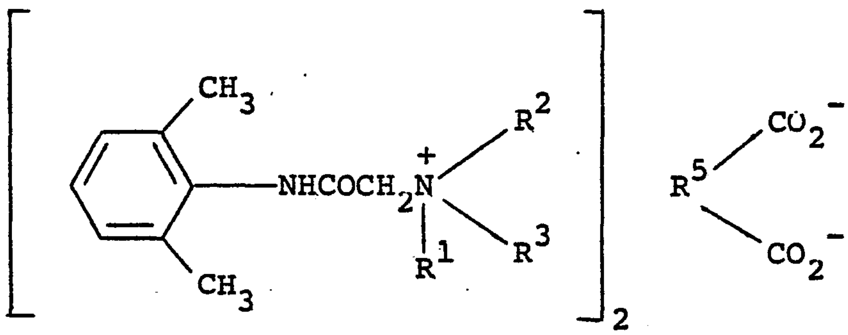

(II)

wherein $R^1$ represents benzyl or chlorobenzyl;

$R^2$ and $R^3$ each represent alkyl of 1 to 4 carbon atoms;

$R^4$ is phenyl or substituted phenyl or a carboxy-substituted aliphatic group;

and $R^5$ is a phenylene group, a substituted phenylene group, an alkylene group, a substituted alkylene group, or a single chemical bond.

A preferred alerting agent is benzyl diethyl [(2,6-xylylcarbamoyl)methyl] ammonium benzoate which has the approved common name denatonium benzoate. Preferably the alerting agent is present in a concentration of from 1 to 10 parts per million of the herbicidal composition; that is to say from 0.001 grams to 0.01 grams per litre of the composition. A description of the preparation of the alerting agents is given in U.S. Patent No. 3080327.

The odourants, gelling agents, and s-triazolopyrimidine emetic agents, described in U.K. Patents 1406881, 1395502, and 1507407 respectively, may also be added to the compositions.

Preferably the composition also comprises a surface-active agent. Preferred salts of herbicidal bipyridylium cations for use in the compositions of the invention are those of the following formulae:

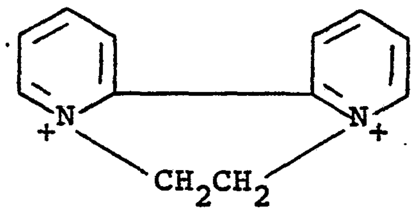

$\frac{2}{n}[X]^{n-}$

or

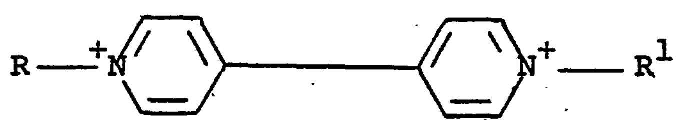

$\frac{2}{n}[X]^{n-}$

wherein R and $R^1$, which may be the same or different, stand for alkyl radicals of from 1 to 4 carbon atoms which may be substituted by hydroxy, halogen, carboxyl, lower alkoxy, lower alkylcarbonyl, lower alkoxycarbonyl, carbamoyl or N-lower alkyl substituted carbamoyl; $[X]^{n-}$ represents an anion and n is an integer from 1 to 4 inclusive. By lower alkoxy, alkoxycarbamoyl, alkylcarbonyl or alkyl, we mean radicals containing an alkyl group of 1 to 4 carbon atoms.

Particularly preferred salts of herbicidal bipyridylium quaternary cations are those listed below:

1,1'-ethylene-2,2'-bipyridylium dibromide (diquat dibromide)

1,1'-dimethyl-4,4'-bipyridylium dichloride (paraquat dichloride)

1,1'-di-2-hydroxyethyl-4,4'-bipyridylium dichloride

1-(2-hydroxyethyl)-1'-methyl-4,4'-bipyridylium dichloride

1,1'-di-carbamoylmethyl-4,4'-bipyridylium dichloride

1,1'-bis-N,N-dimethylcarbamoylmethyl-4,4'-bipyridylium dichloride

1,1'-bis-N,N'-diethylcarbamoylmethyl-4,4'-bipyridylium dichloride

1,1'-diacetonyl-4,4'-bipyridylium dichloride

1,1'-diethoxycarbonylmethyl-4,4'-bipyridylium dibromide
1,1'-diallyl-4,4'-bipyridylium dibromide.

The names in brackets alongside some of the compounds in the above list are the accepted common names for the cationic portion of these compounds. Thus "paraquat" is the common name for the 1,1'-dimethyl-4,4'-bipyridylium cation. Paraquat is a particularly preferred bipyridylium cation for use in the compositions of the invention.

Since the herbicidal effect of a bipyridylium quaternary cation is independent of the nature of the associated anion, the choice of the anion is a matter of convenience, depending, for example, on cost. Preferably the anion is one which gives rise to a salt of convenient water solubility. Examples of anions, which may be mono- or poly- valent, include bromide, chloride, methylsulphate and sulphate. The salt of the herbicidal bipyridylium cation may be formed from a number of similar anions or mixtures of different ones. A salt having any particular desired anion may be prepared either by direct synthesis from reactants which include the desired anion, or by exchanging the anion of a previously prepared salt for the preferred anion by methods well known in the art, for example by passage of a solution of the previously prepared salt through an ion-exchange resin. For reasons of convenience and economy, the chloride anion is a particularly preferred anion.

Since the characteristic herbicidal activity of a salt of a herbicidal bipyridylium quaternary cation resides in the cation only, it is customary to quote concentrations of active ingredient and rates of application in terms of the amount of bipyridylium quaternary cation used, thus avoiding the inconvenience of having to quote different application rates for different

salts of the same bipyridylium quaternary cation. Application rates and concentrations quoted in this specification therefore relate to the amount of herbicidal bipyridylium quaternary cation unless otherwise stated.

The amount of herbicidal bipyridylium quaternary cation present in the compositions of the invention is preferably from 0.5 to 3.0 pounds per Imperial gallon (50 grams to 300 grams per litre) and more preferably from 1.0 to 2.5 pounds per Imperial gallon (100 grams to 250 grams per litre).

Surface-active agents may be cationic, non-ionic or anionic. Generally speaking cationic and non-ionic surface-active agents are preferred to anionic surface-active agents for use in the compositions of the invention, since the latter may interact undesirably with the bipyridylium quaternary salt in the composition. Examples of non-ionic surface-active agents for use in the compositions of the invention include the condensation products of ethylene oxide with alkyl phenols such as octylphenol, nonylphenol and octylcresol. Other non-ionic agents are the partial esters derived from long chain fatty acids and hexitol anhydrides, for example sorbitan monolaurate; the condensation products of the said partial esters with ethylene oxide; and the lecithins.

The amount of surface-active agent present in the composition is preferably from 20 to 100 grams per litre of the composition.

Examples of cationic surface agents include quaternary salts, for example the substances sold under the Trade Mark "Arquad" and "Duoquod".

EXAMPLE 1

This Example illustrates a composition according to the invention. The composition comprises the following ingredients.

| Ingredients | Amount in Grams |
|---|---|
| Paraquat concentrate | x |
| Denatonium benzoate | 0.0001 |
| Lissapol NX | 1.1 |
| DS 4392 | 4.1 |
| Silocolapse 5000 | 0.01 |
| Water | to 100 ml |

In the above table, x represents the amount of paraquat concentrate necessary to give 2 pounds of paraquat ion per Imperial gallon (200 grams of paraquat ion per litre).

Paraquat concentrate is an aqueous solution of paraquat dichloride containing 25% to 30% by weight of 1,1'-dimethyl-4,4'-bipyridylium cation.

"Silcolapse" is a Trade Mark for an anti-foaming agent comprising a silicone derivative.

"Lissapol" NX is a Trade Mark for a surface-active agent comprising a condensate of from 7 to 8 molar proportions of ethylene oxide with 1 molar proportion of *p*-nonylphenol.

DS 4392. This is a code number for a surface-active agent comprising a mixture of amines derived from soya bean fatty acids and commercially available under the name of "soya amine", condensed with approximately 15 molar proportions of ethylene oxide.

HGHA/ayl
5 Nov 1979

0012525

What we claim is:

1. A herbicidal composition comprising an aqueous solution of a herbicidal bipyridylium quaternary salt containing a bittering agent to act as a deterrent to accidental ingestion by acting as an alerting agent.

2. Concentrated herbicidal composition comprising an aqueous solution of a herbicidal bipyridylium quaternary cation, which contains an alerting agent comprising a quaternary salt of the formula (I) or (II) below:

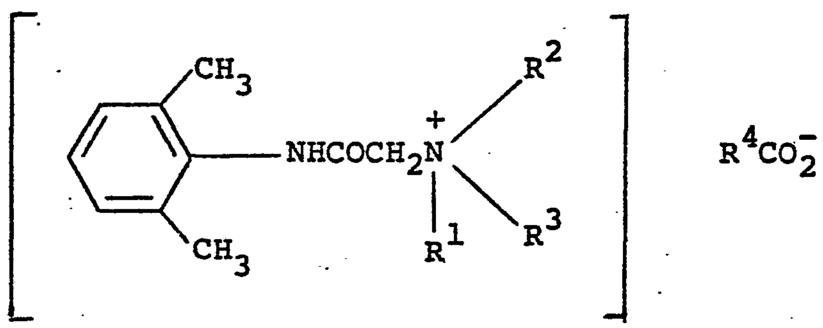

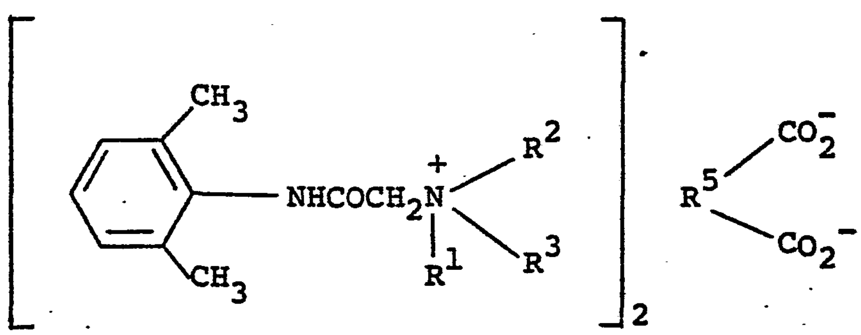

(II)

wherein $R^1$ represents benzyl or chlorobenzyl;

$R^2$ and $R^3$ each represent alkyl of 1 to 4 carbon atoms;

$R^4$ is phenyl or substituted phenyl or a carboxy-substituted aliphatic group;

and $R^5$ is a phenylene group, a substituted phenylene group, an alkylene group, a substituted alkylene group, or a single chemical bond.

3. A herbicidal composition according to Claim 2 wherein the alerting agent is benzyl diethyl ⌈(2,6-xylylcarbamoyl)methyl⌉ ammonium benzoate.

4. A herbicidal composition according to any of the preceding claims and wherein the alerting agent is present in a concentration of from 1 to 10 parts per million of the herbicidal composition; that is to say from 0.001 grams to 0.01 grams per litre of the composition.

5. A herbicidal composition according to any of the preceding claims and further containing an odourant, gelling agent, or _s_-triazolopyrimidine emetic agent, as herein defined.

6. A herbicidal composition according to any of the preceding claims and further containing a surface active agent.

7. A herbicidal composition according to Claim 6 wherein the surface active agent is a cationic or non-ionic surface active agent.

8. A herbicidal composition according to Claim 6 or 7 wherein the surface active agent is a condensation product of ethylene oxide with an alkyl phenol such as octylphenol, nonylphenol or octylcresol; or is a partial ester derived from a long chain fatty acid and hexitol anhydride, for example sorbitan monolaurate; or is a condensation product of the said partial ester with ethylene oxide; or a lecithin.

9. A herbicidal composition according to any of claims 6 to 8 and containing from 20 to 100 grams of surface active agent per litre of the composition.

10. A herbicidal composition according to any of claims 2 to 9 and wherein the herbicidal bipyridylium cation has the following formulae:

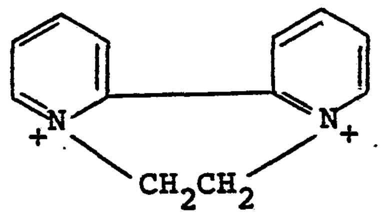

$\frac{2}{n} [X]^{n-}$

or

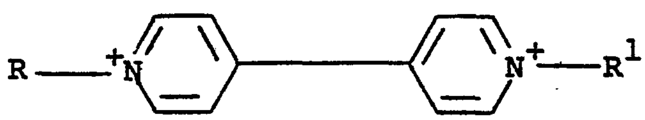

$\frac{2}{n} [X]^{n-}$

wherein R and $R^1$, which may be the same or different, stand for alkyl radicals of from 1 to 4 carbon atoms which may be substituted by hydroxy, halogen, carboxyl, lower alkoxy, lower alkylcarbonyl, lower alkoxycarbonyl, carbamoyl or N-lower alkyl substituted carbamoyl; $[X]^{n-}$ represents an anion and n is an integer from 1 to 4 inclusive.

11. A herbicidal composition according to any of claims 2 to 10 wherein the herbicidal bipyridylium quaternary cation is:

1,1'-ethylene-2,2'-bipyridylium dibromide (diquat dibromide)

1,1'-dimethyl-4,4'-bipyridylium dichloride (paraquat dichloride)

1,1'-di-2-hydroxyethyl-4,4'-bipyridylium dichloride

1-(2-hydroxyethyl)-1'-methyl-4,4'-bipyridylium dichloride

1,1'-di-carbamoylmethyl-4,4'-bipyridylium dichloride

1,1'-bis-N,N-dimethylcarbamoylmethyl-4,4'-bi bipyridylium dichloride

1,1'-bis-N,N'-diethylcarbamoylmethyl-4,4'-bipyridylium dichloride

1,1'-diacetonyl-4,4'-bipyridylium dichloride

1,1'-diethoxycarbonylmethyl-4,4'-bipyridylium dibromide, or

1,1'-diallyl-4,4'-bipyridylium dibromide.

12. A herbicidal composition according to any of claims 2 to 11 and wherein the amount of herbicidal bipyridylium quaternary cation present in the composition is from 0.5 to 3.0 pounds per Imperial gallon (50 grams to 300 grams per litre) and especially from 1.0 to 2.5 pounds per Imperial gallon (100 grams to 250 grams per litre).

13. A herbicidal composition according to any of the preceding claims wherein the anion of the herbicidal bipyridylium quaternary salt is chloride, bromide, sulphate, or methylsulphate.

14. A process for combating undesired vegetation which comprises applying to the vegetation a composition as claimed in any of the preceding claims.

European Patent Office

# EUROPEAN SEARCH REPORT

0012525

Application number

EP 79 30 2638

| DOCUMENTS CONSIDERED TO BE RELEVANT | | | CLASSIFICATION OF THE APPLICATION (Int. Cl. 3) |
|---|---|---|---|
| Category | Citation of document with indication, where appropriate, of relevant passages | Relevant to claim | |
| X | US - A - 4 005 038 (W. MINKOFF)<br>* Column 5, claim 1; column 6, claim 3 *<br>-- | 1-14 | A 01 N 25/32<br>43/40<br>43/90 |
| A | FR - A - 2 344 225 (I.C.I.) | 5 | |
| A | FR - A - 2 379 979 (I.C.I.) | 5 | |
| D,A | FR - A - 2 347 883 (I.C.I.)<br>& GB - A - 1 507 407<br>---- | 5 | |

TECHNICAL FIELDS SEARCHED (Int.Cl. 3)

A 01 N 25/32
43/40
43/90

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

X The present search report has been drawn up for all claims

| Place of search | Date of completion of the search | Examiner |
|---|---|---|
| The Hague | 25-03-1980 | PELTRE |

EPO Form 1503.1 06.78